Europäisches Patentamt

European Patent Office

Office européen des brevets

(11) Veröffentlichungsnummer: **0 288 715 B1**

(12) **EUROPÄISCHE PATENTSCHRIFT**

(45) Veröffentlichungstag der Patentschrift: **15.07.92**

(21) Anmeldenummer: **88104153.7**

(22) Anmeldetag: **16.03.88**

(51) Int. Cl.⁵: **H02G 5/06**

(54) **Isolator.**

(30) Priorität: **15.04.87 CH 1476/87**

(43) Veröffentlichungstag der Anmeldung:
**02.11.88 Patentblatt 88/44**

(45) Bekanntmachung des Hinweises auf die
Patenterteilung:
**15.07.92 Patentblatt 92/29**

(84) Benannte Vertragsstaaten:
**CH DE FR IT LI**

(56) Entgegenhaltungen:
**DE-A- 2 526 671**
**FR-A- 1 487 722**
**US-A- 3 654 378**
**US-A- 4 415 762**

(73) Patentinhaber: **SACE S.P.A. CONSTRUZIONI
ELETTROMECCANICHE
Via Baioni 35 P.O. Box 218
I-24100 Bergamo(IT)**

(72) Erfinder: **Ischi, Jürg
Hofacherstrasse 10
CH-3428 Wiler(CH)**
Erfinder: **Jülke, Elias, Dr.
Kornstrasse 5
CH-5430 Wettingen(CH)**
Erfinder: **Plessl, Andreas, Dr.
Loorenstrasse 20d
CH-5443 Niederrohrdorf(CH)**

(74) Vertreter: **Kaiser, Helmut, Dr.
c/o ABB Management Ltd. TEI-Intellectual
Property P.O.Box
CH-5401 Baden(CH)**

## Beschreibung

TECHNISCHES GEBIET

Bei der Erfindung wird ausgegangen von einem Isolator mit einem mit Druckmittel beaufschlagbaren Isolatorkörper aus gehärtetem Giessharz und mit mindestens einer zur Führung von Hochspannung vorgesehenen, durch den Isolatorkörper geführten und einen metallischen Tragkörper enthaltenden Eingussarmatur.

STAND DER TECHNIK

Ein derartiger Isolator ist bereits aus der DE-C2-25 26 671 bekannt. Der bekannte, vorzugsweise als Schottisolator zum Trennen zweier Gasräume einer metallgekapselten, gasisolierten Schaltanlage verwendete Isolator weist einen aus Kunststoff gegossenen Isolatorkörper auf, in den eine durch den Isolatorkörper geführte, zylinderförmige Eingussarmatur mit ihrer Mantelfläche eingegossen ist. Durch eine vor dem Eingiessen erfolgende Sandstrahlbehandlung der Mantelfläche wird hierbei eine gasdichte Verbindung von Eingussarmatur und Isolatorkörper erreicht. Bei grossen einseitigen Belastungen des Isolators, etwa infolge erheblicher unterschiedlicher Gasdrücke in den beiden Gasräumen, lässt sich eine Ablösung des Kunststoffes des Isolatorkörpers von der Eingussarmatur und damit eine Beschädigung des Isolators nur mit überdimensionierten und damit aufwendig hergestellten Isolatoren mit Sicherheit vermeiden.

DARSTELLUNG DER ERFINDUNG

Die Erfindung, wie sie in Patentanspruch 1 gekennzeichnet ist, löst die Aufgabe, einen Isolator zu schaffen, welcher sich trotz einfacher und kostengünstiger Bauweise auch bei erheblichen mechanischen Belastungen durch eine grosse Betriebssicherheit auszeichnet.

Beim Isolator nach der Erfindung werden auf den Isolatorkörper wirkende Kräfte durch die flexible Koppelschicht abgebaut und werden unerwünscht hohe Spannungen im Grenzbereich zwischen Isolatorkörper und Eingussarmatur weitgehend vermieden. Eine Ablösung des Isolatorkörpers von der Eingussarmatur und damit eine Beschädigung des Isolators tritt daher auch bei grossen einseitigen Belastungen nicht auf.

KURZE BESCHREIBUNG DER ZEICHNUNGEN

Nachfolgend wird die Erfindung anhand von in Zeichnungen dargestellten Ausführungsformen näher erläutert. Es zeigt:

Fig. 1      eine Aufsicht auf einen Schnitt durch eine erste Ausführungsform des Isolators nach der Erfindung, und

Fig. 2      eine Aufsicht auf einen Schnitt durch eine zweite Ausführungsform des Isolators nach der Erfindung.

WEG ZUR AUSFÜHRUNG DER ERFINDUNG

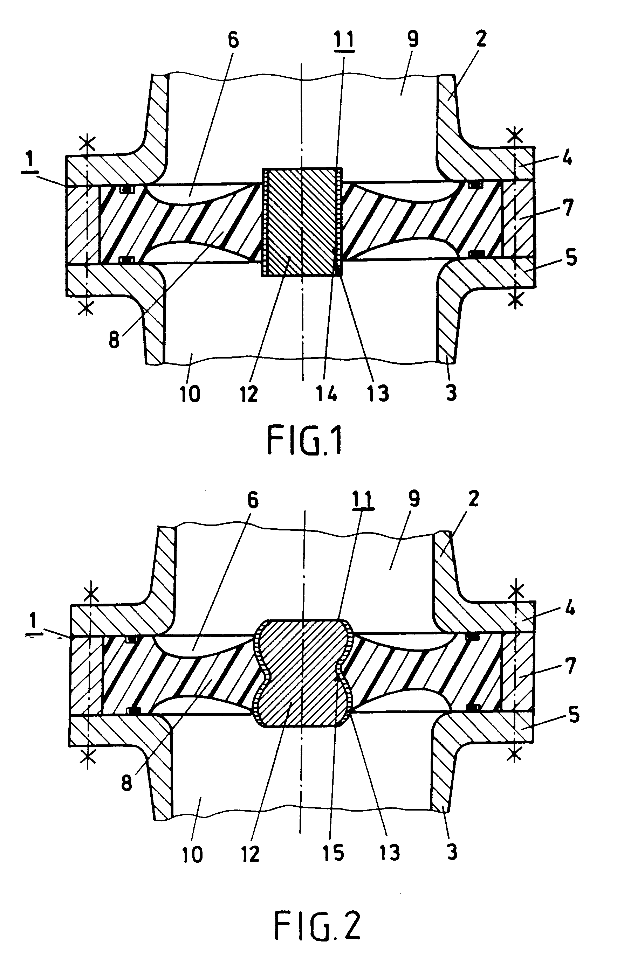

In den Fig. 1 und 2 bezeichnet 1 ein von zwei rohrförmigen, metallischen Kapselungsteilen 2, 3 gebildetes und mit einem Isoliermittel, etwa einem Isoliergas, wie beispielsweise Schwefelhexafluorid von bis zu einigen bar Druck, oder einer Isolierflüssigkeit, wie beispielsweise Oel, gefülltes oder unter Vakuum stehendes Gehäuse. Zwischen Ringflanschen 4 und 5 ist - wie durch nicht bezeichnete Dichtungen angedeutet ist -in gas- bzw. flüssigkeitsdichter Weise ein scheibenförmiger Stützisolator 6 mit einer seinen Aussenrand bildenden, metallischen Ringarmatur 7, etwa durch Verschrauben, eingespannt. Der Stützisolator 6 weist einen scheibenförmigen Isolatorkörper 8 aus einem bei Temperaturen von 100 und mehr °C gehärteten Giessharz auf und schottet zwei Druckräume 9, 10 des Gehäuses 1 gas- bzw. flüssigkeitsdicht gegeneinander ab. Der Isolatorkörper 8 kann anstelle einer Scheibenform irgendeine andere flächenhafte Ausgestaltung aufweisen und etwa trichterförmig ausgebildet sein. Er kann aber auch ein nahezu beliebig gestaltetes Teil eines mit einem Isoliermittel gefüllten oder unter Vakuum stehenden Gehäuses oder aber auch das Gehäuse selber sein. Der Isolatorkörper 8 trägt mindestens eine zur Führung von Hochspannung vorgesehene und durch den Isolatorkörper geführte Eingussarmatur 11.

Die Eingussarmatur 11 enthält einen aus einem elektrisch leitfähigen Material, wie Aluminium oder Kupfer, bestehenden und im wesentlichen zylinderförmig ausgebildeten Tragkörper 12 sowie eine Koppelschicht 13 welche in der Ausführungsform gemäss Fig. 1 auf einer sandgestrahlten, glatten Mantelfläche 14 und in der Ausführungsform gemäss Fig. 2 auf einer sandgestrahlten, gewellten Mantelfläche 15 des Tragkörpers 12 aufgebracht ist. Die Koppelschicht 13 ist zumindest teilweise vom Isolatorkörper 8 umgossen und bewirkt eine gasdichte Halterung der Eingussarmatur 11 im Isolatorkörper 8. Die Koppelschicht 13 besteht aus einem Material, welches eine gegenüber dem Tragkörper 12 höhere elastische Verformbarkeit aufweist. Geeignete Materialien für die Koppelschicht 13 sind Elastomere, insbesondere Fluorelastomere wie sie unter der Handelsbezeichnung VITON® vertrieben werden. Eine aus Fluorkautschuk bestehende Koppelschicht 13 weist eine hervorragende Haftung sowohl auf einem aluminiumenthaltenden Tragkörper 12 auf als auch auf einem Isolatorkörper 8 auf der Basis Epoxidharz. Die Koppelschicht kann je nach Anforderung und geometrischen Abmessungen der Eingussarmatur 11 eine Dicke bis zu mehreren Millimetern aufweisen und kann zudem auch mehrere Gewichtsprozent betragende Beimengungen aus einem leitfähigen Material, wie etwa Graphitpulver, aufweisen.

Die Wirkung eines solchen Stützisolators ist wie folgt:

Ist der Stützisolator 6 den seine Bemessung bestimmenden mechanischen Beanspruchungen ausgesetzt, welche etwa hervorgerufen werden können durch Reaktionskräfte, die vom Gehäuse 1 oder der Eingussarmatur 11 auf den Isolatorkörper 8 übertragen werden, oder durch Kräfte infolge einer Druckdifferenz zwischen den beiden Druckräumen 9 und 10, so werden radial und axial am Isolatorkörper 8 angreifende Spannungen abgebaut, ohne dass sich der Kunststoff des Isolatorkörpers 8 von der Eingussarmatur 11 ablösen kann. Dies ist dadurch bedingt, dass die Koppelschicht 13 mechanische Spannungen, welche zwischen dem Tragkörper 12 und dem Isolatorkörper 8 auftreten können, und Spannungsdeformationen des Isolatorkörpers 8 wegen ihrer hohen elastischen Verformbarkeit abbaut. Daher werden auch bei Isolatoren mit in axialer und/oder radialer Richtung gross dimensionierten Eingussarmaturen 11 übermässige mechanische Spannungen vermieden, welche gegebenenfalls ein Abreissen des Isolatorkörpers von der Eingussarmatur oder ein Reissen des Isolatorkörpers selber bewirken können. Derartig unerwünscht hohe mechanische Spannungen treten bei Isolatoren nach dem Stand der Technik vor allem bei der Herstellung auf. Werden hierbei nämlich die Eingussarmaturen mit einem heisshärtenden Giessharz umgossen, so entstehen diese Spannungen infolge starker Schrumpfung der Isolatorkörper beim Abkühlen. Die Spannungen sind besonders kritisch bei Isolatoren, bei denen die Eingussarmaturen grosse Durchmesser aufweisen und/oder durch dicke Isolatorkörper, wie etwa bei Giessharzmesswandlern, geführt sind.

Durch die Beimengung von leitfähigem Material zur Koppelschicht 13 wird erreicht, dass deren Oberfläche eine Aequipotentialfläche ist. Hierdurch wird das elektrische Feld zwischen dem auf Erdpotential befindlichen metallischen Gehäuse 1 und der auf Hochspannungspotential befindlichen Eingussarmatur 11 gesteuert und wird die zu unerwünschten Teilentladungen führende Wirkung von möglicherweise in der Koppelschicht 13 oder auf den Mantelflächen 14 bzw. 15 vorhandenen Gasbläschen eliminiert.

Durch die gewellte Ausbildung der Mantelfläche 15 des Tragkörpers 12 wird bei der Ausführungsform gemäss Fig. 2 erreicht, dass in axialer Richtung wirkende und etwa durch Schläge auf die Eingussarmatur 11 hervorgerufene Kräfte infolge Flächenpressung zwischen den durch die Wellung hervorgerufenen Flanken des Isolatorkörpers 8 und des Tragkörpers 12 kompensiert werden.

Eine Scherbeanspruchung der Koppelschicht 13 wird daher beim Auftreten axial wirkender Kräfte bei diesem Isolator weitgehend vermieden.

## Patentansprüche

1.  Isolator mit einem mit Druckmittel beaufschlagbaren Isolatorkörper 8) aus gehärtetem Giessharz und mit mindestens einer zur Führung von Hochspannung vorgesehenen, durch den Isolatorkörper (8) geführten und einen metallischen Tragkörper (12) enthaltenden Eingussarmatur (11), dadurch gekennzeichnet, dass die Eingussarmatur (11) eine auf der Mantelfläche (14, 15) des Tragkörpers (12) druckmitteldicht aufgebrachte Koppelschicht (13) aufweist, welche zumindest teilweise vom Isolatorkörper (8) umgossen ist und eine gegenüber dem Tragkörper (12) höhere elastische Verformbarkeit aufweist.

2.  Isolator nach Anspruch 1, dadurch gekennzeichnet, dass die Koppelschicht (13) von einem Elastomer gebildet ist.

3.  Isolator nach Anspruch 2, dadurch gekennzeichnet, dass das Elastomer ein Fluorkautschuk ist.

4.  Isolator nach Anspruch 3 dadurch gekennzeichnet, dass der Tragkörper (12) Aluminium enthält und der Isolatorkörper (8) aus Epoxidharz gegossen ist.

5.  Isolator nach einem der Ansprüche 1 bis 4, dadurch gekennzeichnet, dass die Koppelschicht (13) elektrisch leitfähig ausgebildet ist.

6.  Isolator nach Anspruch 5, dadurch gekennzeichnet, dass der Koppelschicht (13) ein elektrisch leitfähiges Pulver beigemengt ist.

7.  Isolator nach einem der Ansprüche 1 bis 6, dadurch gekennzeichnet, dass die Mantelfläche (15) des Tragkörpers (12) gewellt ausgebildet ist.

## Claims

1.  Insulator having an insulator body (8) of cured casting resin to which a pressurised medium can be applied and having at least one embedding fitting (11) which is provided for carrying high voltage, is fed through the insulator body (8) and contains a metallic support body (12), characterised in that the embedding fitting (11) has a coupling layer (13) which is deposited in a pressure-medium-tight manner on the lateral surface (14, 15) of the support body (12) and which is at least partially cast in the insulator body (8) and has a higher elastic deformability than the support body (12).

2. Insulator according to Claim 1, characterised in that the coupling layer (13) is formed by an elastomer.

3. Insulator according to Claim 2, characterised in that the elastomer is a fluororubber.

4. Insulator according to Claim 3, characterised in that the support body (12) contains aluminium and the insulator body (8) is cast from epoxy resin.

5. Insulator according to one of Claims 1 to 4, characterised in that the coupling layer (13) is of electrically conductive construction.

6. Insulator according to Claim 5, characterised in that an electrically conductive powder is added to the coupling layer (13).

7. Insulator according to one of Claims 1 to 6, characterised in that the lateral surface (15) of the support body (12) is of corrugated construction.

**Revendications**

1. Isolateur comportant un corps isolant (8) en résine moulée durcie, pouvant être sollicité par un fluide sous pression, et au moins une armature scellée (11) prévue pour l'acheminement de la haute tension, traversant le corps isolant (8) et contenant un élément porteur métallique (12), caractérisé en ce que l'armature scellée (11) présente une couche de couplage (13), appliquée d'une manière étanche sur la surface périphérique (14, 15) de l'élément porteur (12), qui est au moins partiellement noyée dans le corps isolant (8) et présente une déformabilité élastique supérieure à celle de l'élément porteur (12).

2. Isolateur suivant la revendication 1, caractérisé en ce que la couche de couplage (13) est formée par un élastomère.

3. Isolateur suivant la revendication 2, caractérisé en ce que l'élastomère est un caoutchouc fluoré.

4. Isolateur suivant la revendication 3, caractérisé en ce que l'élément porteur (12) contient de l'aluminium et le corps isolant (8) est coulé en résine époxyde.

5. Isolateur suivant l'une quelconque des revendications 1 à 4, caractérisé en ce que la couche de couplage (13) est électriquement conductrice.

6. Isolateur suivant la revendication 5, caractérisé en ce qu'une poudre électriquement conductrice est mélangée dans la couche de couplage (13).

7. Isolateur suivant l'une quelconque des revendications 1 à 6, caractérisé en ce que la surface périphérique (15) de l'élément porteur (12) est de forme ondulée.

FIG.1

FIG.2